# EUROPEAN PATENT APPLICATION

(11) **EP 0 930 781 A1**
(43) Date of publication of application: **21.07.1999**
(21) Application number: 97401935.8
(22) Date of filing: 13.08.1997
(51) Int. Cl.: H04N 5/775

(54) **Video recorder control**

(71) Applicant: CANAL+ Société Anonyme, 75711 Paris Cedex 15 (FR)
(72) Inventor: Szucs, Paul, c/o Sony International (Europe) GmbH, 70736 Fellbach (DE); Veltman, Markus, Sony International (Europe) GmbH, 70736 Fellbach (DE); Stumm, Francis, c/o Bureau SPID, 75008 Paris (FR); Declerck, Christophe, 28210 Senantes (FR)
(74) Representative: Cozens, Paul Dennis

(57) **Abstract**

A controller for a digital video recorder (20) is arranged to receive generic commands from an application running in a receiver/decoder (10) and to generate control sequences appropriate to a digital video recorder (20) connected to the receiver/decoder (10) for transmission over a high-speed digital interface such as an IEEE 1394 interface which also carries data between the receiver/decoder (10) and the video recorder (20). The controller may be used in conjunction with an application which generates an on-screen menu for control of the video recorder (20).

## Description

The present invention relates to control of consumer electronic equipment. The invention is particularly but not exclusively concerned with interfacing of a digital video recorder to a receiver/decoder for digital television systems.

A problem presently encountered with controlling domestic televisions and video recorders is that video recorders and televisions are produced by a number of different manufacturers, and are not generally inter-operable. Thus, it is often necessary for a user to have several remote controllers; for example, to control a satellite receiver/decoder (set-top-box), television and video recorder, three separate remote controllers are typically required, one for the television, one for the video recorder, and one for the set-top-box.

There are currently available "universal" remote controllers which can be programmed to learn the commands for several different devices; however, programming these may be time consuming. In addition, a universal remote controller may not be capable of implementing all functions of a proprietary remote controller, or may be unwieldy, having provision for several functions which are not required.

In addition to the above mentioned prior art, some manufacturers supply remote controllers which can control several devices which they manufacture, for example both a television and video recorder. Such controllers do not operate with other manufacturers' products.

Pursuant to the present invention, it has been proposed to control at least some functions of a digital video recorder (which term is intended to include any device capable of storing one or more programmes or data output by a receiver/decoder) by means of commands transmitted from the receiver/decoder. Such control may be in addition to or in place of control by means of a control device (for example an infrared remote control) associated with the digital video recorder.

In a first aspect, the invention provides a controller for a receiver/decoder for a digital television system comprising means for receiving, from an application running in said receiver/decoder, a generic control command for controlling a digital video recorder; means for processing the generic control command to generate a control sequence for a digital video recorder connected to the receiver/decoder; and means for outputting the control sequence to the digital video recorder. The invention also provides a corresponding method of controlling a digital video recorder, or other peripheral device.

In this way, an application can control a digital video recorder without needing to "know" how control is effected. If the video recorder is changed or the interface protocol altered, it is only necessary for the controller to be reconfigured.

Preferably, the controller is arranged to receive a plurality of generic control commands, preferably including at least a play command, a stop command, a record command, and preferably also pause, rewind and fast-forward commands.

Preferably the controller is arranged, for example on initialisation or on connection of a video recorder, to attempt to detect the type of digital video recorder connected to the receiver/decoder (if any) and to configure itself accordingly. The controller may store information concerning a plurality of different types of digital video recorder and corresponding details of control sequences or capabilities specific to that video recorder.

Preferably, the controller has means for producing an output indicative of the type of digital video recorder connected, for example means for storing a plurality of logos for display on the television screen, and means for selecting a logo for display based on the results of detection. In this way, for example, a proprietary logo may be displayed for the video recorder in question, thereby enabling the manufacturer of the video recorder to be identified, whilst retaining the advantages of a generic interface as far as the application is concerned.

In a preferred implementation, the controller is arranged to transmit commands to the video recorder over the same digital interface that is employed for transmission of programme or other data for storage, preferably as asynchronous commands over an IEEE 1394 interface.

Preferably the controller includes means for monitoring acceptance of control sequences by a digital video recorder, and generating error messages if necessary for the application that issued the generic command to the controller.

The controller is preferably arranged to control a device which controls the interface to which the digital video recorder is connected. A suitable device is described in European patent application number 97401793.1, the disclosure of which is incorporated herein by reference. In this way, the interface may be upgraded or altered, without necessarily having to modify the controller. Preferably the controller includes means for trapping one or more events or errors signalled by the device, and for generating an event or report for an application.

The controller may be employed in conjunction with an application arranged to present an on-screen command menu, for example in the form of a series of icons, and to generate a generic command for the digital video recorder for processing by the controller in response to selection of an icon by a user.

It is noted that "on-screen" programming or control of a video recorder is known *per se*. However, known arrangements generally require a television to be tuned to the video recorder output channel, require a dedicated remote controller for the video recorder, and cannot conveniently be used simultaneously with other on-screen control or menus, for example provided by a receiver/decoder. The above described arrangement provides the advantage that the on-screen menu is not generated by the video recorder, but by the receiver/decoder, and can therefore conveniently be provided together with or as part of other on-screen menus provided by the receiver/decoder.

A related aspect of the invention provides a receiver/decoder incorporating such a controller and preferably also such an application. A further aspect of the invention provides the application independently.

Preferably, the application is arranged to provide a cursor (by which is meant any symbol or graphical effect highlighting or otherwise indicating a chosen menu option) and to generate a command corresponding to the chosen menu option in response to an actuation signal from the user. For example, the application may display a series of icons, for example corresponding to play, stop and record buttons, and highlight one icon. The receiver/decoder preferably has a remote control including at least one key usable for selecting which icon is highlighted and another key for generating the actuation signal. In this way, the remote control need not have dedicated keys for each function. Preferably, the application is arranged to select a default option in dependence on the state of the digital video recorder. For example, the application may default to a play command when a recorded medium is present in the video recorder but is not playing, and a pause or stop command when the video recorder is playing. In this way, only a single keypress may be required by a user to effect an anticipated command.

The apparatus is most preferably implemented in a receiver/decoder, for example for a digital satellite system as described in our co-pending international applications PCT/EP97/02106 - 02117 to which reference should be made and the disclosures of which are incorporated herein by reference. The controller is preferably arranged to communicate with the digital video recorder using a high-speed digital interface, such as the IEEE 1394 interface, using a suitable device driver, such as the one described in EP 97401793.1, the disclosure of which is incorporated herein by reference, but can be used with any suitable digital interface. The receiver/decoder preferably incorporates a device for remultiplexing a received MPEG data stream to provide an output stream for storage on the digital video recorder, a suitable example of which is described in European patent application number 97401792.3 the disclosure of which is incorporated herein by reference.

The application is preferably run in an interpreted language and the controller is preferably implemented as an application module.

Function of the controller may be integrated with an application or may be integrated with a device for controlling the interface, or both.

Embodiments incorporating preferred features of the present invention will now be described, purely by way of example, with reference to the accompanying drawings, in which:-
Figure 1 is a schematic diagram of a system embodying the invention;
Figure 2 is a functional block diagram of the arrangement of the receiver/decoder in the system of Fig. 1;
Figure 3 is a schematic overview of the operation of a controller in the system of Fig. 1.
Figure 4 shows a typical on-screen menu produced by the system of Fig. 1; and
Figure 5 shows typical command options available in different states of the video recorder.

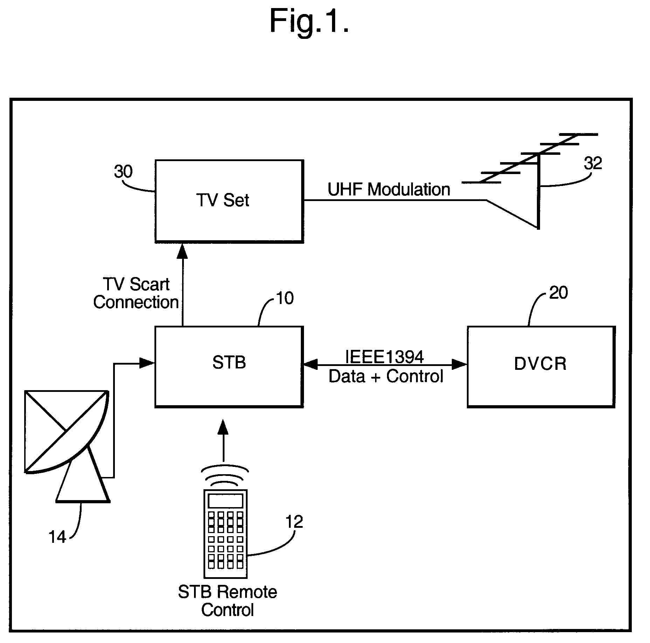

Referring to Fig. 1, a typical system embodying the invention comprises an integrated receiver/decoder or set-top-box (STB) 10 which can receive commands from an infra-red remote control 12 and receives signals from a satellite receiver 14.

The STB 10 provides an output suitable for display to a television 30, the television also receiving terrestrial signals by means of antenna 32. A digital video recorder 20 is coupled to the STB via a high speed digital interface, in this embodiment conforming to the IEEE 1394 standard, which can pass data in both directions and control commands *at least* from the STB to the video recorder.

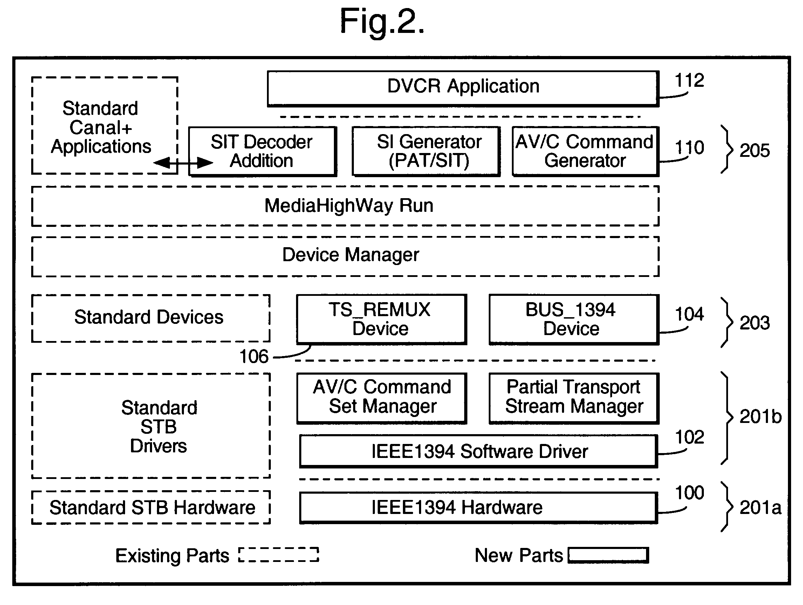

Referring to Fig. 2, a general outline of a viable architecture for the set-top-box will be briefly explained. More details of the general architecture of the set-top-box may be found in our co-pending applications mentioned above, to which reference should be made. It is to be noted that the schematic diagram is for the purposes of illustration only, and is not intended to prescribe particular division of functions between hardware and software.

The STB architecture comprises a number of layers. The bottom layers 201a, 201b include a hardware interface 100 to the IEEE 1394 bus, in addition to hardware interfaces to other components (described in our co-pending applications), and any software required for effecting basic control of the hardware, for example including a device driver 102. Device drivers and the division of functions between hardware and software may vary from manufacturer to manufacturer; it is merely necessary to ensure that a common interface is presented to the layers above. The device driver receives commands from a device 104 in layer 203, which provides standard interfacing to an application. Details of a preferred device which has some advantageous features may be found in European patent application number 97401792.3, but a simpler implementation of the device may be employed if desired. Layer 203 includes other devices, such as a device 106 for generating a partial transport stream for recording on a video recorder, for example as described in European patent application no. 97401793.1. Again, a simpler device having reduced functionality may be employed for outputting a bitstream for storage on the digital video recorder. The devices operate under the general control of a run-time engine comprising a device manager. Layer 205 above contains application libraries used in the running of applications. This layer includes a module 110 for generating commands to be processed by a digital video recorder; this module is used, among others, by an application 112 which provides on-screen control of a digital video recorder.

The operation of the command generator module will now be described briefly.

In response to an initialisation command, which may be generated on reset of the STB, or by an application, the command generator call the Bus_1394 device to perform initialisation of the interface and to set appropriate communication parameters. Following successful initialisation, the module attempts to detect a digital video recorder connected to the bus. If a digital video recorder of a known type returns a recognised identifier, the module retrieves information relating to that video recorder from memory. The information typically includes a manufacturer's logo and may include information relating to control sequences specific to that video recorder. Simplified implementations of the module may only detect the presence or absence of a video recorder, and use a single control sequence set for all recognised video recorders.

At the initialisation stage, the module may also interrogate the video recorder to determine status information, for example whether a medium is present in the recorder, whether the medium is recordable or read-only, and characteristics of the medium such as the time elapsed or remaining, or storage capacity.

After initialisation, the module is arranged to receive calls from an application to effect various operations (for example start playing, stop, start recording, pause, wind forward or backward) or to return information concerning the video recorder. The module is arranged to cause the Bus_1394 device to transmit an asynchronous command frame containing a series of bytes recognised by the video recorder and to monitor the response, if any, of video recorder. If appropriate, an error is signalled to the application, or information returned by the video recorder is interpreted as necessary and passed to the application.

Commands are passed as an opcode specifying a general type of command (e.g. play, record, wind), followed by one or more operated bytes specifying a subfunction or further information.

In this embodiment, commands are encapsulated in a Function Control Protocol (FCP) frame conforming to the IEEE 1394 and IEC 1883 standards, both of which are incorporated herein by reference. The precise details of transmission are not germane to this invention; indeed, the invention may be used in conjunction with any suitable data communication interface. For ease of understanding, however, the format of an FCP frame which may be used when an IEEE 1394 interface is employed is shown in Table 1 below.

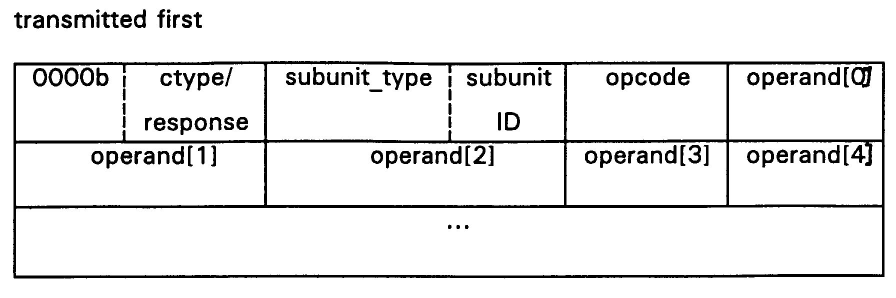

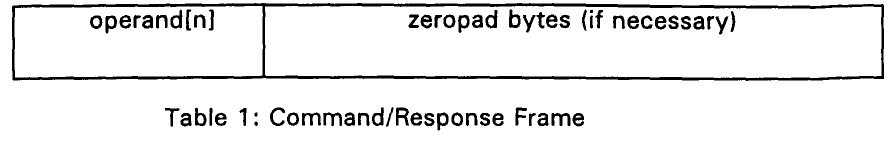

As will be appreciated, the precise control sequences used will depend on the digital video recorded concerned, and must be implemented by referring to the video recorder manufacturer's specification. The general format of some typical control sequences will be described; this information may provide useful guidance in the construction of both a controller and also in the construction of a digital video recorder which can be used in conjunction with a receiver/decoder in a system according to the invention.
To effect playing, an opcode byte having a value defined as "play" followed by a single operand byte specifying either normal speed or pause in playback is sent.
To record, an opcode byte having a value defined as "record" followed by a single byte operand specifying either continuous recording or pause whilst recording is sent.
To control the transport mechanism, an opcode value defined as "wind" followed by a single byte operand specifying either stop, rewind or fast forward is sent.

The precise value of the opcodes and operands may, of course, be varied; it is merely necessary to ensure that the values sent by the controller are recognised by the digital video recorder. A different command format could be used if desired.

Other commands may be provided, depending on the capabilities of the video recorder, to wind to a specific portion on a tape, for example using further operand bytes to specify the frame, second, minute and hour, or to wind to a particular index point on a tape. In addition, a transport enquiry state command may be sent, following which the digital video recorder should return a similar command frame indicating the present status of the video recorder (for example playing, recording, no cassette, rewinding, fast forwarding, stopped, paused in playback or recording, or stopped unexpectedly due to a fault). Similarly, other interrogation commands may cause the digital video recorder to return information concerning the type of medium (for example type, size and write protect status).

The type of video recorder (for example manufacturer and model type) may be determined by sending an FCP command frame to the video recorder requesting a response, or by detecting the unique node identifier used for communication on the IEEE 1394 bus. This may be detected either by a simple, low-level access to the IEEE 1394 interface. If the device described in European patent application number 97401793.1 is employed (this is not necessary), detection of video recorder characteristics may be implemented using the Bus_1394_Info_Periph command.

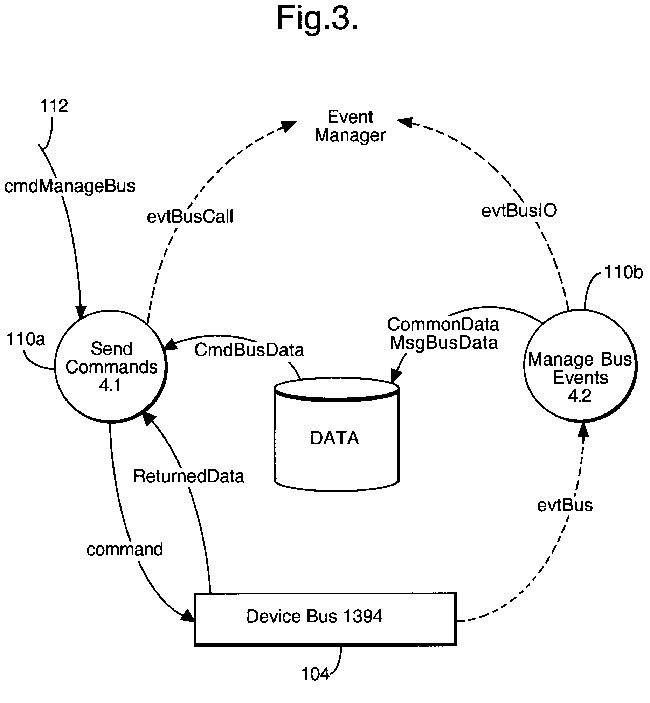

An overview of the system is shown schematically in Figure 3. It will be appreciated that the controller 110 comprises both a module 110a for sending commands to the interface device 104 and also a module 110b for managing events produced by the interface device 104.

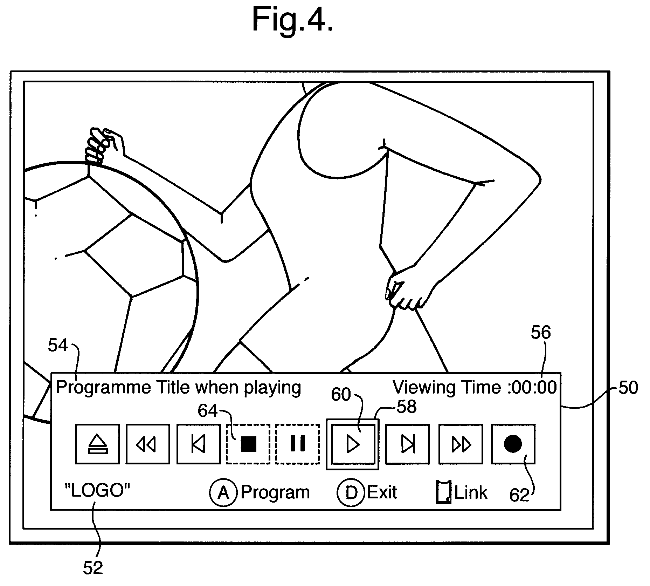

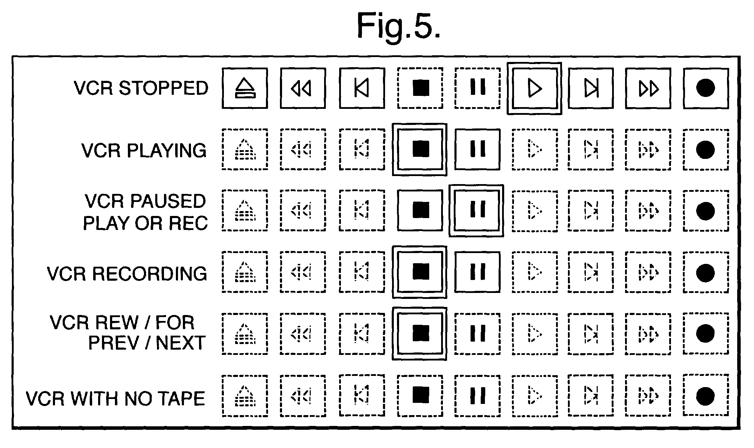

An application co-operating with the controller to provide on-screen control of the video recorder will now be described, with reference to Figures 4 and 5.

Referring to Fig. 4, the application presents a window 50 containing a on-screen control panel for the digital video recorder. The window 50 contains a logo 52 corresponding to that of the manufacturer of the digital video recorder which has been recognised by the controller. When a programme is playing, the window also contains the programme title 54 and the elapsed viewing time 56.

In the case depicted in Fig. 4, a video recorder has been detected and a cassette is in place, but the video recorder is stopped. In this case, the application positions a cursor 58 by default on a play button 60, so that actuation of the "ok" key on the remote control immediately causes the programme to start playing. Selection of other available buttons, for example the record button 62 may be effected by use of left and right arrows keys on the remote control. As can be seen from Fig. 4, the stop button 64, and also the pause button are displayed only in outline or in grey, or otherwise de-emphasised or distinguished from the other command buttons, as these functions are not available when the video recorder is stopped.

Referring to Fig. 5, typical displays showing the buttons highlighted by default and de-emphasised (to indicate that they are not available) in different modes of the video recorder are shown. The application may arranged to implement modification of available and default menu items by storing a table of available buttons and a default cursor position for each state of the video recorder.

To summarise, control of the video recorder in the system described above may be effected in general accordance with the following outline scheme:-
1) The interface is initialised and, if present, a video recorder is detected and the controller configured accordingly, in particular to display the appropriate logo.
2) In response to a command by a user (for example depression of a pre-determined button on the remote control), or in accordance with other conditions defined in an application, an on-screen control panel is presented on the viewing screen by the video controller application, optionally using graphic display libraries in the set-top-box.
3) Assuming a video recorder with a tape loaded is connected, the application also displays a cursor highlighting one of the available command buttons, in accordance with an algorithm to select a default button, for example as outlined in Fig. 5.
4) In response to actuation of a left or right arrow key, the position of the cursor is moved between the available command buttons. In response to actuation of an "ok" button on the remote control, an event is sent to the application which initiates actuation of the appropriate command by the controller.
5) The controller generates the appropriate control sequence for the connected video recorder to effect the command.
6) The control sequence is transmitted by the interface bus-driver, and by the hardware interface to the digital video recorder.
7) If an error occurs in the transmission of the command, this is signalled from the bus-driver via the controller to the application; otherwise, the application continues execution.

It will be appreciated that the above outline is presented merely by way of example, and is not intended to prescribe a particular implementation. In addition to the above, there are, of course, other operations involved but the details of these are not germane to the control aspect described above. For example, in addition to the above execution of commands, the controller and/or the application must configure the appropriate hardware (the demultiplexer/decoder) within the receiver/decoder to receive input data from the video recorder interface rather than from the satellite front end to enable a recorded programme to be played, and must provide data for transmission to the interface for recording. There are a number of ways in which this can be achieved. Preferably the application makes use of a device for selecting segments of a received bitstream for output to the video recorder, for example as described in European patent application number 97401792.3, the disclosure of which is incorperated herein by reference, but simpler implementations may also be used with embodiments of the present invention.

In addition, the application must ensure that appropriate (modified) Programme Map Tables (PMT), Programme Association Tables (PAT), Selection Information Tables (SIT) and, optionally, Discontinuity Information Tables (DIT) are included in any bitstream transmitted to the video recorder, so that the recorded programme(s) can be retrieved. These tables will be modified in the production of a partial transport stream; the precise details are not germane to the present invention.

To achieve this, the PMT can remain as it was in the original transport stream, but the remaining tables are preferably calculated based on information in the original transport stream or carried as separate data in private tables. Since the application controls the content of the data stream sent to the video recorder, it is possible to determine explicitly what the relevant tables should contain to coincide with the data sent. There are a number of ways in which this might be achieved, but the precise manner of implementation is not critical to the present invention.

It will be appreciated that the details of the application and of the controller may be varied independently, and indeed both can be independently provided. In particular, the controller may receive generic commands from an application which, for example, is arranged to ensure recording of a particular programme, without necessarily providing on-screen control of the video recorder. In place of on-screen control, an alternative application might be arranged to respond to specifically assigned buttons on a remote control associated with the receiver/decoder to generate generic commands for the video recorder; this still has the advantage of inter-operability among different manufacturer's equipment, and the ability to co-ordinate control of the video recorder with the actions of the receiver/decoder.

It is particularly to be noted that the functions provided by the controller and the application may be merged or distributed otherwise.

It will be readily understood that the functions performed by the hardware, the computer software, and such like are performed on or using electrical and like signals. Software implementations may be stored in ROM, or may be patched or stored in FLASH.

It will be understood that the present invention has been described above purely by way of example, and modifications of detail can be made within the scope of the invention.

Each feature disclosed in the description, and (where appropriate) the claims and drawings may be provided independently or in any appropriate combination, unless otherwise stated.

## Claims

1. A controller for a receiver/decoder for a digital television system, the controller comprising means for receiving, from an application running in said receiver/decoder, at least one generic control command; means for processing the or each generic control command to generate a corresponding control sequence for a digital video recorder connected to the receiver/decoder; and means for outputting each generated control sequence to the digital video recorder.

2. A controller according to Claim 1, including means for storing an identifier of the digital video recorder, if any, connected to the receiver/decoder.

3. A controller according to Claim 2, including means for obtaining the identifier by communicating with the digital video recorder, if any, connected to the receiver/decoder.

4. A controller according to Claim 2 or 3 including means for storing information relating to a plurality of different digital video recorders having mutually different characteristics.

5. A controller according to Claim 4 wherein generation or outputting of control sequences is based on said stored information and said identifier, whereby the controller can modify the control sequences to be output according to the characteristics of the video recorder, if any, connected to the receiver/decoder.

6. A controller according to any of Claims 2 to 5 including means for providing an application with information concerning at least one feature of the digital video recorder, if any, connected to the receiver/decoder based on the stored identifier.

7. A controller according to Claim 6, including means for storing a plurality of graphical identifiers or logos corresponding to a plurality of different video recorders, wherein said providing means includes means for providing a stored graphical identifier or logo associated the said digital video recorder, if any, connected to the receiver/decoder.

8. A controller according to any preceding claim arranged to produce a control sequence including an op-code specifying the type of operation to be performed and optionally one or more operands providing further information specifying the operation.

9. A controller according to any preceding claim arranged to receive at least play, stop and record commands from an application.

10. A receiver/decoder including a controller according to any preceding claim and an application arranged to provide one or more generic control commands to the controller to effect control of a digital video recorder.

11. A receiver/decoder according to Claim 10, wherein the application is arranged to effect display of a command menu and to generate said generic control commands in response to selection of a menu item by a user.

12. A receiver/decoder according to Claim 11, wherein selection of a menu item comprises moving, if necessary, a cursor to a desired item and providing an actuation signal.

13. A receiver/decoder according to Claim 12, wherein the application is arranged to position the cursor by default at a menu item selected by the application in dependence on the state of the digital video recorder so that selection of the default menu item by a user requires only provision of said actuation signal.

14. A receiver/decoder according to any of Claims 11 to 13 wherein the application is arranged to mask or otherwise indicate command options which are not available in the current video recorder state.

15. A receiver/decoder according to any of Claims 10 to 15 as dependent on Claim 6 or any claim dependent thereon, wherein the application further includes means for displaying a graphical identifier of the video recorder.

16. A receiver/decoder including a controller according to Claim 6 or any claim as dependent thereon and an application arranged to receive information provided by the controller and to effect display of information concerning the digital video recorder.

17. A receiver/decoder according to any of Claims 10 to 16 including a digital interface and having means for communicating both data for storage on or playback from the digital video recorder and said control sequences over said interface.

18. An application for use in a receiver/decoder according to any of Claims 10 to 17, arranged to cooperate with a controller according to any of Claims 1 to 9, the application including means for providing one or more generic control commands to the controller and means for receiving information provided by the controller concerning characteristics of the video recorder, if any, connected to the receiver decoder.

19. A method of controlling a digital video recorder in a digital television system comprising a receiver/decoder and a visual output device comprising, at the receiver/decoder:
generating a command menu for display on the visual output device;
receiving a signal indicating selection of a command option;
generating a generic control command corresponding to the selected command option;
processing the generic control command to generate a control sequence for a digital video recorder connected to the receiver/decoder; and
outputting the control sequence to the digital video recorder.

20. A method according to Claim 18, wherein the control sequence is output via a digital interface which also serves to communicate data for storage on or playback from the digital video recorder.

21. A digital television system comprising:
a receiver/decoder having a visual output device coupled thereto;
a digital video recorder coupled via an interface to the receiver/decoder;
means within the receiver/decoder for providing control commands to the digital video recorder, preferably via said interface.

22. A digital television system according to Claim 21, including a receiver/decoder according to any of Claims 10 to 17, said means within the receiver/decoder comprising a controller according to any of Claims 1 to 9.
